(19) **Europäisches Patentamt**
**European Patent Office**
**Office européen des brevets**

(11) **EP 2 327 652 B1**

(12) **EUROPÄISCHE PATENTSCHRIFT**

(45) Veröffentlichungstag und Bekanntmachung des Hinweises auf die Patenterteilung:
**19.09.2012 Patentblatt 2012/38**

(51) Int Cl.:
*B66C 13/46* (2006.01)      *G01B 11/24* (2006.01)
*G01B 11/27* (2006.01)      *G01B 11/00* (2006.01)
*G01B 11/25* (2006.01)

(21) Anmeldenummer: **09014822.2**

(22) Anmeldetag: **30.11.2009**

(54) **Verfahren zur Ermittlung von Position und Orientierung eines dreidimensionalen Objekts, Steuerungsprogramm und Postionierungserfassungssystem**

Method for determining the position and orientation of a three dimensional object, control program and positioning system

Procédé de détermination de la position et de l'orientation d'un objet tridimensionnel, programme de commande et système de détection du positionnement

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**01.06.2011 Patentblatt 2011/22**

(73) Patentinhaber: **SIEMENS AKTIENGESELLSCHAFT**
**80333 München (DE)**

(72) Erfinder:
• **Feiten, Wendelin, Dr.**
**85579 Neubiberg (DE)**
• **Fiegert, Michael**
**81739 München (DE)**
• **Klimowicz, Cäsar**
**81825 München (DE)**

(56) Entgegenhaltungen:
**EP-A1- 1 621 849      WO-A1-02/34663**
**DE-A1-102008 019 373      US-A- 5 943 476**
**US-B1- 6 404 506**

**Beschreibung**

Verfahren zur Ermittlung von Position und Orientierung eines dreidimensionalen Objekts, Steuerungsprogramm und Positionserfassungssystem

Verfahren zur Ermittlung von Position und Orientierung eines dreidimensionalen Objekts werden insbesondere in Containerkrananlagen zur genauen Einweisung von Zugfahrzeugen angewendet. Zum Be- und Entladen sind Zugfahrzeuge unterhalb eines Containerkrans sehr genau zu positionieren, damit Lasten durch den Containerkran auf einem Auflieger des Zugsfahrzeugs sicher abgesetzt bzw. von dort aufgenommen werden können. Vielfach erfolgt ein Einweisen von Zugfahrzeugen sogar noch manuell durch Aufsichtspersonen. Dies ist nicht nur häufig ungenau, sondern durchaus extrem gefährlich für Aufsichtspersonen, Kranfahrer und Zugfahrzeugführer. Derzeit existieren am Markt nur wenige automatisierte Lösungen zur Einweisung von Zugfahrzeugen in Containerkrananlagen.

In EP 1 337 454 A1 ist ein Verfahren zur Ausrichtung eines Lastkraftwagens relativ zu einem Kran auf eine gewünschte Position bekannt, bei dem die Position des Lastkraftwagens mittels eines am Kran montierten Laserscanners ermittelt wird. Hierzu werden Positionen von Kanten des Lastkraftwagens ermittelt, insbesondere an einem Auflieger des Lastkraftwagens. Nachteilig bei dem aus EP 1 337 454 A1 bekannten Verfahren ist, daß zur korrekten Positionserfassung benötigte Angaben zu einem Fahrzeugtyp des jeweiligen Lastkraftwagens durch einen Kranführer manuell eingegeben werden müssen. Dies ist zeitaufwendig und fehleranfällig. Darüber hinaus ist eine Kantendetektion zur Ableitung der Position eines Lastkraftwagens unzuverlässig, da Laserscanner nur eine begrenzte Anzahl diskreter Meßstrahlen emittieren, so daß eine Kante in eine Lücke zwischen den Meßstrahlen fallen kann. Des weiteren macht das aus EP 1 337 454 A1 bekannte Verfahren sehr starke implizite Annahmen über eine Orientierung eines zu erfassenden Lastkraftwagens. Es wird nämlich vorausgesetzt, daß ein Lastkraftwagen im wesentlichen parallel zu einer Kaimauer fährt und einer Geraden folgt.

Der vorliegenden Erfindung liegt die Aufgabe zugrunde, ein schnelles, genaues und zuverlässiges Verfahren zur Ermittlung von Position und Orientierung eines dreidimensionalen Objekts zu schaffen sowie eine geeignete Implementierung des Verfahrens anzugeben.

Diese Aufgabe wird erfindungsgemäß durch ein Verfahren mit den in Anspruch 1 angegebenen Merkmalen, ein Steuerungsprogramm mit den in Anspruch 13 angegebenen Merkmalen und ein Positionserfassungssystem mit den in Anspruch 14 angegebenen Merkmalen gelöst. Vorteilhafte Weiterbildungen der vorliegenden Erfindung sind in den abhängigen Ansprüchen angegeben.

Erfindungsgemäß wird zur Ermittlung von Position und Orientierung eines dreidimensionalen Objekts zumindest ein Oberflächenabschnitt des Objekts mittels einer Abtasteinrichtung abgetastet und eine Menge von durch ihre Koordinaten gekennzeichneten Punkten auf dem Oberflächenabschnitt als Abtastwerte ermittelt. Die Abtastwerte werden als zumindest einen Oberflächenabschnitt kennzeichnendes Meßereignis abgebildet. Ein probabilistisches Objektmodell bildet bedingte Wahrscheinlichkeiten von vorgebbaren Meßereignissen unter Voraussetzung vorgebbarer Objektzustände ab. Dabei ist ein Objektzustand zumindest durch Objekttyp, -position und - orientierung gekennzeichnet. Aus einem vorliegenden Meßereignis, das zumindest einen Oberflächenabschnitt kennzeichnet, wird anhand des probabilistischen Objektmodells, von Wahrscheinlichkeiten vorgebbarer Objektzustände und einer Wahrscheinlichkeit des vorliegenden Meßereignisses eine Schätzung eines Objektzustands ermittelt. Zumindest Objekttyp, - position und -orientierung des abgetasteten Objekts sind aus der ermittelten Schätzung des Objektzustands ableitbar.

Dadurch daß Oberflächenabschnitte anstelle von Kanten als kennzeichnende Eigenschaften von erfaßten Objekttypen auf Grundlage eines probabilistischen Objektmodells verwendet werden, sind für eine zuverlässige Positionsermittlung erfindungsgemäß keine klar detektierbaren Kanten an zu erfassenden Objekten erforderlich. Außerdem wird der Objekttyp durch die Schätzung des Objektzustands automatisch ermittelt, so daß zeitaufwendige und fehleranfällige Benutzereingaben nicht mehr erforderlich sind. Darüber hinaus werden aufgrund einer automatischen Ermittlung der Objektorientierung im Rahmen der Schätzung des Objektzustands Ungenauigkeiten aufgrund diesbezüglich unzutreffender, starrer Voraussetzungen für eine Positionserfassung vermieden.

Die vorliegende Erfindung wird nachfolgend an einem Ausführungsbeispiel näher erläutert. Es zeigt

Figur 1      eine schematische Darstellung eines Positionserfassungssystems zur Ermittlung von Position und Orientierung eines dreidimensionalen Objekts,

Figur 2      ein Ablaufdiagramm für ein Verfahren zur Ermittlung von Position und Orientierung eines dreidimensionalen Objekts,

Figur 3      eine schematische Darstellung eines Zugfahrzeugs mit einem entsprechend einem probabilistischen Objektmodell erwarteten Meßereignis,

Figur 4      eine schematische Darstellung eines Zugfahrzeugs mit einem entsprechend einem probabilistischen Objektmodell nicht erwarteten Meßereignis.

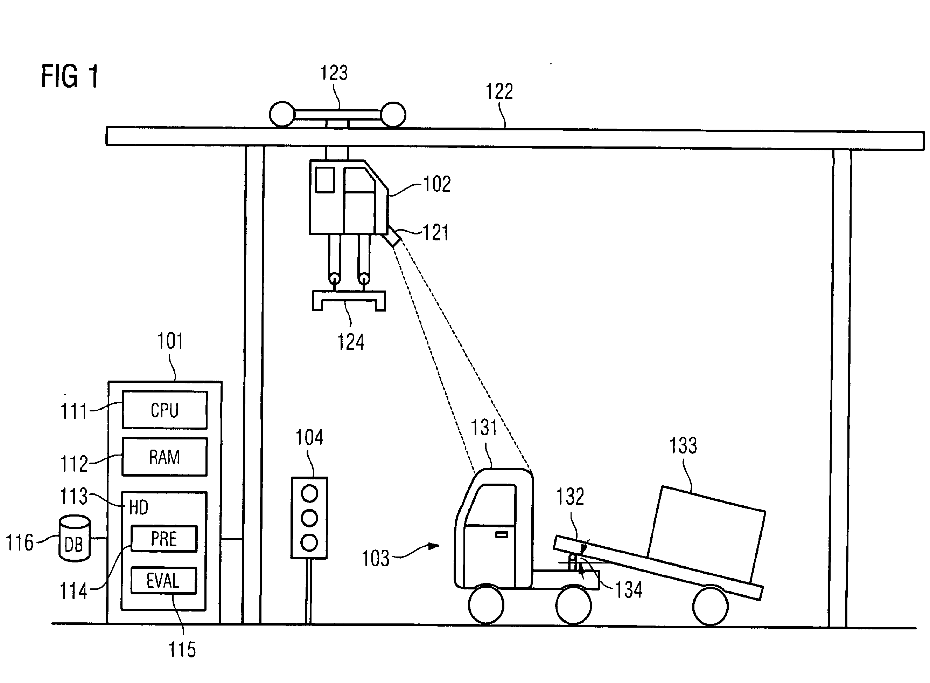

Das in Figur 1 schematisch dargestellte Positionserfassungssystem zur Ermittlung von Position und Orientierung eines dreidimensionalen Objekts ist im vorliegenden Ausführungsbeispiel in einer Containerkrananlage installiert und umfaßt einen Steuerungsrechner 101 und einen an einem Kran 102 montierten Laserscanner 121. Der Kran 102 ist mittels eines durch ein Krangestell 122 geführten Fahrwerks 123 innerhalb eines Umschlagsbereichs der Containerkrananlage verfahrbar und weist ein Hubwerk 124 für Containerlasten auf.

Mittels des Laserscanners 121 als Abtasteinrichtung kann ein in den Umschlagsbereich einfahrendes Zugfahrzeug 103 mit einem Auflieger 132 für zu transportierende Container 133 als zu erfassendes Objekt dreidimensional abgetastet werden. Bei einer Abtastung des Zugfahrzeugs 103 wird durch den Laserscanner 121 beispielsweise eine Dachfläche 131 des Zugfahrzeugs 103 als Oberflächenabschnitt erfaßt. Dabei wird eine Menge von durch ihre Koordinaten gekennzeichneten Punkten auf der Dachfläche 131 als Abtastwerte ermittelt. Zusätzlich kann auch eine Oberseite des Aufliegers 132 oder des Containers 133 auf dem Auflieger 132 als charakteristischer Oberflächenabschnitt erfaßt werden.

Der Steuerungsrechner 101 umfaßt einen Prozessor 111, einen Arbeitsspeicher 112 sowie eine Festplatte 113 und ist über eine Eingabe/Ausgabe-Schnittstelle mit dem Laserscanner 121 verbunden. Auf der Festplatte 113 sind Programmcode 114 für eine Vorverarbeitung von Abtastwerten des Laserscanners 121 und Programmcode 115 für eine Ermittlung einer Schätzung eines Objektzustands Q des Zugfahrzeugs 103 gespeichert. Der Programmcode 114, 115 ist in den Arbeitsspeicher 112 des Steuerungsrechners ladbar und implementiert bei Verarbeitung durch den Prozessor 111 eine Vorverarbeitungseinheit bzw. eine Auswerteeinheit des in Figur 1 dargestellten Positionserfassungssystems.

Die beispielsweise durch einen Rechenprozeß im Steuerungsrechner 101 implementierte Vorverarbeitungseinheit dient zur Abbildung der Abtastwerte des Laserscanners 121 als zumindest einen Oberflächenabschnitt kennzeichnendes Meßereignis M. Entsprechend einer alternativen Ausführungsform kann die Vorverarbeitungseinheit auch in ein den Laserscanner 121 umfassendes Meßsystem integriert sein.

Dem Steuerungsrechner 101 ist darüber hinaus eine Datenbasis 116 als Speichereinheit zur Speicherung eines probabilistischen Objektmodells zugeordnet. Das probabilistische Objektmodell bildet bedingte Wahrscheinlichkeiten P(MIQ) von vorgebbaren Meßereignisses M unter Voraussetzung vorgebbarer Objektzustände Q ab. Ein Meßereignis M kann beispielsweise sein, daß ein bestimmter Raumpunkt als belegt erkannt wird, oder daß eine bestimmte geometrische Figur als im Raum vorhanden erkannt wird, oder daß ein bestimmtes Raumsegment als frei erkannt wird. Ein Objektzustand Q ist zumindest durch Objekttyp, -position und -orientierung gekennzeichnet. Anhand des probabilistischen Objektmodells kann ermittelt werden, welche Wahrscheinlichkeit P(MIQ) besteht, daß ein bestimmtes Meßereignis M eintritt, wenn ein Zugfahrzeug 103 als erfaßtes Objekt einen vorgebbaren Objektzustand Q aufweist, der Objekttyp, -position und -orientierung umfaßt.

Durch die beispielsweise durch einen Rechenprozeß im Steuerungsrechner 101 implementierte Auswerteeinheit wird eine Schätzung eines Objektzustands Q aus einem vorliegenden Meßereignis M ermittelt, das zumindest einen Oberflächenabschnitt kennzeichnet. Die Schätzung P(QIM) des Objektzustands Q erfolgt dabei anhand des probabilistischen Objektmodells, anhand von Wahrscheinlichkeiten P(Q) vorgebbarer Objektzustände Q und anhand einer Wahrscheinlichkeit P(M) des vorliegenden Meßereignisses M.

Neben Objekttyp, -position und -orientierung umfaßt der Objektzustand Q in einer bevorzugten Ausführungsform zusätzlich auch einen Winkel 134 zwischen Zugfahrzeug 103 und Auflieger 132 sowie eine Position des Containers 133 auf dem Auflieger 132.

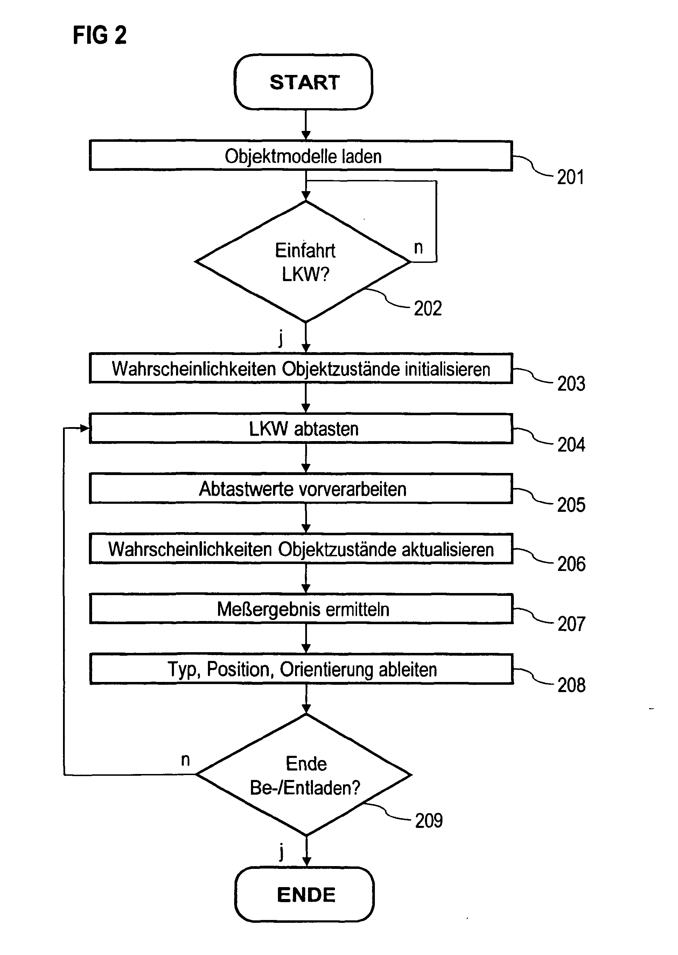

Entsprechend dem in Figur 2 dargestellten Ablaufdiagramm werden entsprechend Schritt 201 zunächst probabilistische Objektmodelle aus der Datenbasis 116 geladen oder nachgeladen. Sobald ein Zugfahrzeug 103 in eine vorgebbare Fahrspur der Containerkrananlage einfährt, wird es mittels des am Kran montierten Laserscanners 121 abgetastet. Entsprechend Schritt 202 wird hierzu laufend überwacht, ob ein Zugfahrzeug 103, beispielsweise ein LKW, in die Fahrspur einfährt. Falls dies der Fall ist, wird nachfolgend eine Menge möglicher Objektzustände Q ermittelt. Außerdem werden Wahrscheinlichkeiten möglicher Objektzustände Q durch Startwertvorgabe initialisiert (Schritt 203). Anschließend wird das Zugfahrzeug abgetastet (Schritt 204). Danach werden die Abtastwerte durch die Vorverarbeitungseinheit vorverarbeitet (Schritt 205). Dann erfolgt für jeden möglichen Objektzustand Q entsprechend Schritt 206 eine Aktualisierung seiner Wahrscheinlichkeit P(Q).

Außerdem wird das vorliegende Meßereignis P(M) gemäß Schritt 207 anhand einer für die bedingten Wahrscheinlichkeiten P(MIQ) von vorgebbaren Meßereignissen M unter Voraussetzung möglicher Objektzustände Q und für die Wahrscheinlichkeiten P(Q) der möglichen Objektzustände Q berechneten totalen Wahrscheinlichkeit entsprechend folgender Gleichung ermittelt:

$$P(M) \;=\; \int P(M|Q) \cdot P(Q)\,dQ\,.$$

Aus dem vorliegenden Meßereignis M wird dann

- anhand des probabilistischen Objektmodells,
- anhand der Wahrscheinlichkeiten P(Q) der möglichen Objektzustände Q und
- anhand der Wahrscheinlichkeit P(M) des vorliegenden Meßereignisses M

eine Schätzung des Objektzustands Q entsprechend folgender Beziehung ermittelt:

$$P(Q|M) \;=\; \frac{P(M|Q)\,\cdot\,P(Q)}{P(M)}\,.$$

Die bedingte Wahrscheinlichkeit P(MIQ) ergibt sich dabei aus dem probabilistischen Objektmodell.

Aus der ermittelten Schätzung des Objektzustands Q werden entsprechend Schritt 208 Objekttyp, -position und -orientierung des Zugfahrzeugs 103, der Winkel 134 zwischen Zugfahrzeug 103 und Auflieger 132 sowie die Position des Containers 133 auf dem Auflieger 132 abgeleitet. Auf Basis einer solchen Positions- bzw. Abstandsmessung wird für das Zugfahrzeug 103 ein Zielführungssignal zur Anfahrt einer Be- bzw. Entladeposition erzeugt. Dieses Zielführungssignal wird im vorliegenden Ausführungsbeispiel an einer Ampel 104 im Umschlagsbereich optisch signalisiert. Zusätzlich kann noch ein akustisches Zielführungssignal erzeugt werden.

Entsprechend Schritt 209 wird überprüft, ob ein Be- oder Entladevorgang mit dem Zugfahrzeug 103 bereits beendet ist. Falls der Be- oder Entladevorgang noch nicht beendet ist, werden wieder die Schritte 204 bis 208 iterativ durchlaufen. Grundsätzlich können mit dem in Figur 2 dargestellten Verfahren mehrere Zugfahrzeuge gleichzeitig behandelt werden.

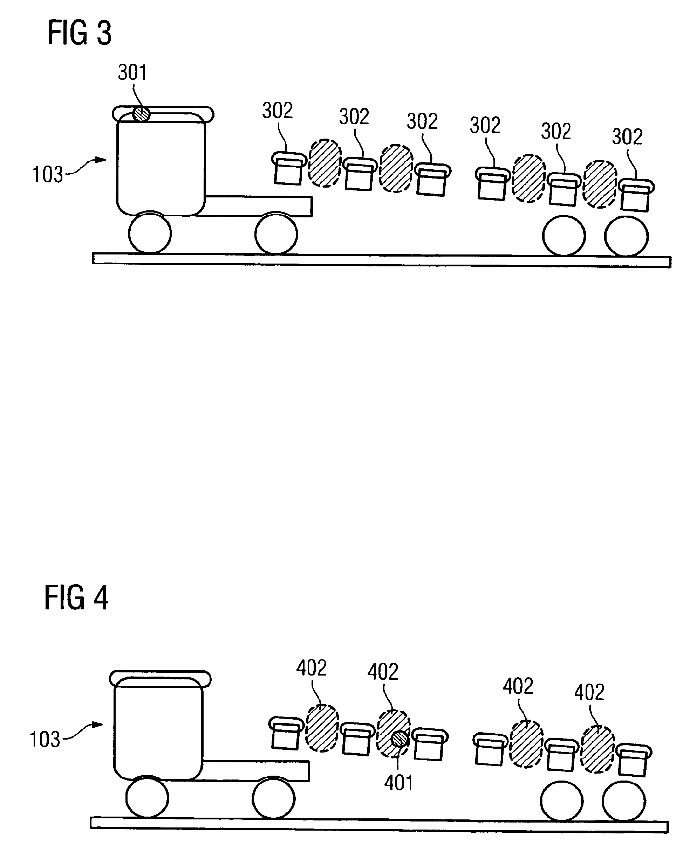

Zur Ermittlung der Schätzung des Objektzustands Q werden Bewertungen der Wahrscheinlichkeiten P(Q) der möglichen Objektzustände Q anhand fortlaufend ermittelter Meßereignisse M aktualisiert. Dabei können die Bewertungen beispielsweise auch stichprobenbasiert aktualisiert werden. Die Bewertung der Wahrscheinlichkeit P(Q) eines möglichen Objektzustands Q wird beispielsweise erhöht, wenn ein Abtastwert 301, wie in Figur 3 dargestellt, in einen entsprechend dem probabilistischen Objektmodell erwarteten Bereich 302 fällt. Fällt ein Abtastwert 401, wie in Figur 4 dargestellt, dagegen in einen entsprechend dem probabilistischen Objektmodell erwarteten freien Bereich 402, wird die Bewertung der Wahrscheinlichkeit P(Q) des möglichen Objektzustands Q deutlich verringert. Als initiale Wahrscheinlichkeitsverteilung des Objektzustands Q kann beispielsweise eine Gleichverteilung oder eine aus vergangenen Fällen empirisch ermittelte Häufigkeitsverteilung vorgegeben werden.

Darüber hinaus wird Bewertung der Wahrscheinlichkeit P(Q) eines möglichen Objektzustands Q zu einem vorgebbaren Abtastzeitpunkt $t=T_n$ vorzugsweise anhand eines Bewegungsmodells des Zugfahrzeugs 103 aus einer Bewertung der Wahrscheinlichkeit P(Q) des Objektzustands Q zu einem vorhergehenden Abtastzeitpunkt $t=T_{n-1}<T_n$ entsprechend folgendem funktionalen Zusammenhang ermittelt:

$$P(Q(t \;=\; T_n)) \;=\; f\big(P(Q(t \;=\; T_{n-1}))\big)\,.$$

Die Bewertung der Wahrscheinlichkeit P(Q) eines möglichen Objektzustands Q unter Verwendung des Bewegungsmodells kann auch mit oben beschriebenen stichprobenbasierten Bewertungen kombiniert werden. Aus hoch bewerteten Stichprobenelementen können entsprechend dem Bewegungsmodell mehrere Nachfolger erzeugt werden. Aus mittel bewerteten Stichprobenelementen wird ein Nachfolger erzeugt. Gering bewertete Stichprobenelemente werden gelöscht, so daß eine Gesamtgröße einer Stichprobenmenge näherungsweise konstant gehalten werden kann. Eine Vereinfachung ergibt sich, wenn die Stichprobenmenge a priori auf eine Teilmenge eines möglichen Zustandsraums beschränkt wird. Im Anwendungsumfeld von Containerkrananlagen kann der mögliche Zustandsraum beispielsweise auf reguläre Fahrspuren und Bereiche beschränkt werden, in denen Fahrzeuge in einen Erfassungsbereich eines Sensorsystems eintreten.

Eine weitere Vereinfachung ergibt sich, wenn sowohl das probabilistische Objektmodell als auch eine Wahrscheinlichkeitsdichteverteilung der Objektzustände als Mixtures of Gaussians modelliert werden. Eine weitere Vereinfachung ergibt sich, wenn der Objektzustand innerhalb jeder Objektklasse als unimodal modelliert wird und insbesondere durch eine Normalverteilung dargestellt werden kann. In diesem Fall kann eine Kombination aus einem Kalman-Filter für kontinuierliche Parameter und einem Bayes-Klassifikator für Klassenvariable verwendet werden.

Die Anwendung der vorliegenden Erfindung ist nicht auf das beschriebene Ausführungsbeispiel beschränkt.

**Patentansprüche**

1. Verfahren zur Ermittlung von Position und Orientierung eines dreidimensionalen Objekts (131, 132, 133), insbesondere eines Zugfahrzeugs (103) in einer Containerkrananlage, bei dem

   - zumindest ein Oberflächenabschnitt des Objekts mittels einer Abtasteinrichtung (121) abgetastet und eine Menge von durch ihre Koordinaten gekennzeichneten Punkten auf dem Oberflächenabschnitt als Abtastwerte ermittelt wird (205),
   - die Abtastwerte als zumindest einen Oberflächenabschnitt kennzeichnendes Meßereignis abgebildet werden, **dadurch gekennzeichnet dass**:

   - ein probabilistisches Objektmodell bedingte Wahrscheinlichkeiten von vorgebbaren Meßereignissen unter Voraussetzung vorgebbarer Objektzustände abbildet, wobei ein Objektzustand zumindest durch Objekttyp, -position und - orientierung gekennzeichnet ist (206),

- aus einem vorliegenden Meßereignis, das zumindest einen Oberflächenabschnitt kennzeichnet, anhand des probabilistischen Objektmodells, von Wahrscheinlichkeiten vorgebbarer Objektzustände und einer Wahrscheinlichkeit des vorliegenden Meßereignisses eine Schätzung eines Objektzustands ermittelt wird (207),

- aus der ermittelten Schätzung des Objektzustands zumindest Objekttyp, -position und -orientierung des abgetasteten Objekts ableitbar sind (208).

2. Verfahren nach Anspruch 1,
bei dem zur Ermittlung der Schätzung des Objektzustands (207) für eine Menge möglicher Objektzustände Bewertungen von Wahrscheinlichkeiten der möglichen Objektzustände anhand fortlaufend ermittelter Meßereignisse aktualisiert werden.

3. Verfahren nach Anspruch 2,
bei dem eine Bewertung einer Wahrscheinlichkeit eines möglichen Objektzustands erhöht wird, wenn ein Meßereignis einem aus dem probabilistischen Objektmodell abgeleiteten Erwartungswert zumindest näherungsweise entspricht.

4. Verfahren nach einem der Ansprüche 2 oder 3,
bei dem eine Bewertung einer Wahrscheinlichkeit eines möglichen Objektzustands verringert wird, wenn ein Meßereignis von einem aus dem probabilistischen Objektmodell abgeleiteten Erwartungswert abweicht.

5. Verfahren nach einem der Ansprüche 2 bis 4,
bei dem eine Gleichverteilung als initiale Wahrscheinlichkeitsverteilung des Objektzustands vorgegeben wird.

6. Verfahren nach einem der Ansprüche 2 bis 4,
bei dem eine Häufigkeitsverteilung als initiale Wahrscheinlichkeitsverteilung des Objektzustands vorgegeben wird.

7. Verfahren nach einem der Ansprüche 1 bis 6,
bei dem eine Bewertung einer Wahrscheinlichkeit eines Objektzustands zu einem vorgebbaren Abtastzeitpunkt anhand eines Bewegungsmodells des abgetasteten Objekts aus einer Bewertung der Wahrscheinlichkeit des Objektzustands zu einem vorhergehenden Abtastzeitpunkt ermittelt wird.

8. Verfahren nach einem der Ansprüche 1 bis 7,
bei dem die Wahrscheinlichkeit des vorliegenden Meßereignisses aus einer für die bedingten Wahrscheinlichkeiten von vorgebbaren Meßereignissen unter Voraussetzung vorgebbarer Objektzustände und für die Wahrscheinlichkeiten der vorgebbaren Objektzustände berechneten totalen Wahrscheinlichkeit ermittelt wird.

9. Verfahren nach einem der Ansprüche 1 bis 8,
bei dem das abgetastete Objekt ein Zugfahrzeug (103) in einer Containerkrananlage umfaßt, und bei dem der Objektzustand zusätzlich einen Winkel zwischen dem Zugfahrzeug und einem Auflieger (132) sowie eine Position einer Last (133) auf dem Auflieger umfaßt.

10. Verfahren nach Anspruch 9,
bei dem das Zugfahrzeug (103) mittels eines an einem Containerkran (102) montierten Sensors (121) abgetastet wird, und bei dem das Zugfahrzeug durch den Sensor abgetastet wird, sobald es in eine vorgebbare Fahrspur der Containerkrananlage einfährt, und bei dem auf Basis einer Positions- oder Abstandsmessung für das Zugfahrzeug ein Zielführungssignal zur Anfahrt einer Be - und/oder Entladeposition erzeugt wird.

11. Verfahren nach Anspruch 10,
bei dem ein optisches und/oder akustisches Zielführungssignal erzeugt wird.

12. Verfahren nach einem der Ansprüche 1 bis 9,
bei dem der Oberflächenabschnitt des Objekts mittels der Abtasteinrichtung dreidimensional abgetastet wird.

13. Steuerungsprogramm, das in einen Arbeitsspeicher (112) eines Steuerungsrechners (101) ladbar ist und zumindest einen Codeabschnitt aufweist (114, 115), bei dessen Ausführung

- eine Abtastung zumindest eines Oberflächenabschnitts eines dreidimensionalen Objekts (131, 132, 133) mittels einer Abtasteinrichtung (121) und eine Ermittlung einer Menge von durch ihre Koordinaten gekennzeichneten Punkten auf dem Oberflächenabschnitt als Abtastwerte veranlaßt wird (205),

- eine Abbildung der Abtastwerte als zumindest einen Oberflächenabschnitt kennzeichnendes Meßereignis veranlaßt wird,

- ein Speicherzugriff auf ein probabilistisches Objektmodell, das bedingte Wahrscheinlichkeiten von vorgebbaren Meßereignisses unter Voraussetzung vorgebbarer Objektzustände abbildet, veranlaßt wird, wobei ein Objektzustand zumindest durch Objekttyp, -position und -orientierung gekennzeichnet ist (206),

- aus einem vorliegenden Meßereignis, das zumindest einen Oberflächenabschnitt kennzeichnet, anhand des probabilistischen Objektmodells, von Wahrscheinlichkeiten vorgebbarer Objektzustände und einer Wahrscheinlichkeit des vorliegenden Meßereignisses eine Schätzung eines Objektzustands ermittelt wird (207), wobei aus der ermittelten Schätzung des Objektzustands zumindest Objekttyp, -position und -orientierung des abgetasteten Objekts ableitbar sin (208),

wenn das Steuerungsprogramm im Steuerungsrechner abläuft.

14. Positionserfassungssystem zur Ermittlung von Position und Orientierung eines dreidimensionalen Objekts (131, 132, 133), insbesondere eines Zugfahrzeugs (103) in einer Containerkrananlage, mit

- einer Abtasteinrichtung (121) zur Abtastung zumindest eines Oberflächenabschnitts des Objekts und zur Ermittlung einer Menge von durch ihre Koordinaten gekennzeichneten Punkten auf dem Oberflächenabschnitt als Abtastwerte (205),
- einer Vorverarbeitungseinheit zur Abbildung der Abtastwerte als zumindest einen Oberflächenabschnitt kennzeichnendes Meßereignis,
- einer Speichereinheit zur Speicherung eines probabilistischen Objektmodells, das bedingte Wahrscheinlichkeiten von vorgebbaren Meßereignisses unter Voraussetzung vorgebbarer Objektzustände abbildet, wobei ein Objektzustand zumindest durch Objekttyp, -position und -orientierung gekennzeichnet ist (206),
- einer Auswerteeinheit zur Ermittlung einer Schätzung eines Objektzustands aus einem vorliegenden Meßereignis, das zumindest einen Oberflächenabschnitt kennzeichnet, anhand des probabilistischen Objektmodells, von Wahrscheinlichkeiten vorgebbarer Objektzustände und einer Wahrscheinlichkeit des vorliegenden Meßereignisses (207), wobei aus der ermittelten Schätzung des Objektzustands zumindest Objekttyp, -position und -orientierung des abgetasteten Objekts ableitbar sind (208).

**Claims**

1. Method for determining position and orientation of a three-dimensional object (131, 132, 133), in particular a tractor vehicle (103) in a container crane installation, in which

- at least one surface section of the object is scanned by means of a scanning device (121), and a set of points identified by their coordinates is determined (205) on the surface section as scanned values,
- the scanned values are displayed as measurement event identifying at least one surface section, **characterized in that**:
- a probabilistic object model displays conditional probabilities of prescribable measurement events on the premise of prescribable object states, an object state being identified (206) at least by object type, object position and object orientation,
- an estimate of an object state is determined (207) from an existing measurement event, which identifies at least one surface section, with the aid of the probabilistic object model, of probabilities of prescribable object states and a probability of the existing measurement event, and
- at least object type, object position and object orientation of the scanned object can be derived (208) from the determined estimate of the object state.

2. Method according to Claim 1, in which, in order to determine the estimate of the object state (207), for a set of possible object states, evaluations of probabilities of the possible object states are updated with the aid of continuously determined measurement events.

3. Method according to Claim 2, in which an evaluation of a probability of a possible object state is increased when a measurement event corresponds at least approximately to an expected value derived from the probabilistic object model.

4. Method according to either of Claims 2 and 3, in which an evaluation of a probability of a possible object state is reduced when a measurement event deviates from an expected value derived from the probabilistic object model.

5. Method according to one of Claims 2 to 4, in which a uniform distribution is prescribed as initial probability distribution of the object state.

6. Method according to one of Claims 2 to 4, in which a frequency distribution is prescribed as initial probability distribution of the object state.

7. Method according to one of Claims 1 to 6, in which an evaluation of a probability of an object state is determined at a prescribable scanning instant with the aid of a movement model of the scanned object from an evaluation of the probability of the object state at a preceding scanning instant.

8. Method according to one of Claims 1 to 7, in which the probability of the existing measurement event is determined from a total probability calculated for the conditional probabilities of prescribable measurement events on the premise of prescribable object states, and for the probabilities of the prescribable object states.

9. Method according to one of Claims 1 to 8, in which the scanned object comprises a tractor vehicle (103) in a container crane installation, and in which the object state additionally comprises an angle between the tractor vehicle and a trailer (132), as well as a position of a load (133) on the trailer.

10. Method according to Claim 9, in which the tractor vehicle (103) is scanned by means of a sensor (121) mounted on a container crane (102), and in which the tractor vehicle is scanned by the sensor as soon as it enters a prescribable driving lane of the container crane installation, and in which a targeting signal for approaching a loading and/or unloading position is produced on the basis of a position or distance measurement for the tractor vehicle.

11. Method according to Claim 10, in which an optical and/or acoustic targeting signal is produced.

12. Method according to one of Claims 1 to 9, in which the surface section of the object is scanned in three dimensions by means of the scanning device.

13. Control program which can be loaded into a main memory (112) of a control computer (101), and has (114, 115) at least one code section, during the execution of which

- there are prompted (205) a scanning at least of one surface section of a three-dimensional object (131, 132, 133) by means of a scanning device (121) and a determination of a set of points identified by their coordinates on the surface section as scanned values,
- a display of the scanned values is prompted as measurement event identifying at least one surface section,
- a memory access is prompted to a probabilistic object model which displays conditional probabilities of prescribable measurement events on the premise of prescribable object states, an object state being identified (206) at least by object type, object position and object orientation, and
- an estimate of an object state is determined (207) from an existing measurement event, which identifies at least one surface section, with the aid of the probabilistic object model, of probabilities of prescribable object states and a probability of the existing measurement event, it being possible for at least object type, object position and object orientation of the scanned object to be derived (208) from the determined estimate of the object state when the control program is running in the control computer.

14. Position determination system for determining position and orientation of a three-dimensional object (131, 132, 133), in particular a tractor vehicle (103) in a container crane installation, having

- a scanning device (121) for scanning at least one surface section of the object and for determining a set of points identified by their coordinates on the surface section as scanned values (205),
- a preprocessing unit for displaying the scanned values as measurement event identifying at least one surface section,
- a storage unit for storing a probabilistic object model which displays conditional probabilities of prescribable measurement events on the premise of prescribable object states, an object state being identified (206) at least by object type, object position and object orientation, and
- an evaluation unit for determining an estimate of an object state from an existing measurement event which identifies at least one surface section, with the aid of the probabilistic object model, of probabilities of prescribable object states and a probability of the existing measurement event (207), it being possible to derive (208) at least object type, object position and object orientation of the scanned object from the determined estimate of the object state.

## Revendications

1. Procédé de détermination de la position et de l'orientation d'un objet ( 131, 132, 133 ) tridimensionnel, notamment d'un véhicule ( 103 ) de traction dans une installation de grue pour conteneurs, dans lequel

- on détecte au moins une partie de la surface de l'objet au moyen d'un dispositif ( 121 ) de détection et on détermine ( 205 ), comme valeur d'échantillonnage, un certain nombre de points sur la partie de la surface **caractérisés par** leurs coordonnées,
- on représente un évènement de mesure caractérisant au moins une partie de la surface, **caractérisé en ce que**
- un modèle probabiliste de l'objet représente, en supposant des états de l'objet pouvant être prescrits, des probabilités conditionnés d'évènements de mesure pouvant être prescrits, un état de l'objet étant **caractérisé par** au moins un type de l'objet, une position de l'objet et une orientation de l'objet ( 206 ),

- à partir d'un évènement de mesure présent, qui caractérise au moins une partie de la surface, on détermine au moyen du modèle probabiliste de l'objet, des états de l'objet pouvant être prescrits par des probabilités et d'une probabilité de l'évènement de mesure présent, une évaluation de l'état de l'objet ( 207 ),

- à partir de la probabilité déterminée de l'état de l'objet, on peut déduire le au moins un type, une position et une orientation de l'objet détecté ( 208 ).

2. Procédé suivant la revendication 1, dans lequel, pour la détermination de l'évaluation de l'état ( 207 ) de l'objet, on met à jour, au moyen d'évènements déterminés en continu pour un certain nombre d'états de l'objet possibles, des évaluations de probabilité des états de l'objet possibles.

3. Procédé suivant la revendication 2, dans lequel on augmente une évaluation d'une probabilité d'un état de l'objet possible, lorsqu'un évènement de mesure correspond au moins à peu près à une valeur à laquelle on s'attend qui est déduite du modèle probabiliste de l'objet.

4. Procédé suivant l'une des revendications 2 ou 3, dans lequel on diminue une évaluation d'une probabilité d'un état de l'objet possible, lorsqu'un évènement de mesure s'écarte d'une valeur à laquelle on s'attend qui est déduite du modèle probabiliste de l'objet.

5. Procédé suivant l'une des revendications 2 à 4, dans lequel on prescrit une distribution uniforme comme distribution initiale de probabilité de l'état de l'objet.

6. Procédé suivant l'une des revendications 2 à 4, dans lequel on prescrit une distribution de fréquence comme distribution initiale de probabilité de l'état de l'objet.

7. Procédé suivant l'une des revendications 1 à 6, dans lequel on détermine une évaluation d'une probabilité d'un état de l'objet à un instant d'échantillonnage pouvant être prescrit au moyen d'un modèle de déplacement de l'objet détecté à partir d'une évaluation de la probabilité de l'état de l'objet à un instant d'échantillonnage précédent.

8. Procédé suivant l'une des revendications 1 à 7, dans lequel on détermine la probabilité de l'évènement de mesure présent à partir d'une probabilité totale calculée pour les probabilités conditionnées d'évènements de mesure pouvant être prescrits, en supposant des états de l'objet pouvant être prescrits, et pour les probabilités des états de l'objet pouvant être prescrits.

9. Procédé suivant l'une des revendications 1 à 8, dans lequel l'objet détecté comprend un véhicule ( 103 ) de traction dans une installation de grue pour conteneurs et dans lequel l'état de l'objet comprend en outre un angle entre le véhicule de traction et un semi-remorque ( 132 ) ainsi qu'une position d'une charge ( 133 ) sur le semi-remorque.

10. Procédé suivant la revendication 9, dans lequel on détecte le véhicule ( 103 ) de traction au moyen d'un capteur ( 121 ) monté sur une grue ( 102 ) pour conteneur et dans lequel on détecte le véhicule de traction par le capteur dès qu'il entre dans une voie de circulation pouvant être prescrite de l'installation de grue pour conteneur et dans lequel on produit, sur la base d'une mesure de position et de distance pour le véhicule de traction, un signal de guidage à destination pour aller à une position de chargement et/ou de déchargement.

11. Procédé suivant la revendication 10, dans lequel on produit un signal optique et/ou acoustique de guidage à destination.

12. Procédé suivant l'une des revendications 1 à 9, dans lequel on détecte en trois dimensions la partie de surface de l'objet au moyen du dispositif de détection.

13. Programme de commande qui peut être chargé dans une mémoire ( 112 ) de travail d'un ordinateur ( 101 ) de commande et qui comporte ( 114, 115 ) au moins une partie de code, dans l'exploitation duquel

- on provoque ( 205 ) une détection d'au moins une partie de la surface d'un objet ( 131, 132, 133 ) en trois dimensions au moyen d'un dispositif ( 121 ) de détection et une détermination d'un certain nombre de points **caractérisés par** leurs coordonnées sur la partie de la surface comme valeur d'échantillonnage,

- on provoque une représentation des valeurs d'échantillonnage comme évènement de mesure caractérisant au moins une partie de la surface,

- on provoque un accès en mémoire à un modèle probabiliste d'objet, qui reproduit des probabilités conditionnées d'évènements de mesure pouvant être prescrits, en supposant des états de l'objet pouvant être prescrits, un état de l'objet étant caractérisé ( 206 ) par au moins le type, la position et l'orientation de l'objet,

- à partir d'un évènement de mesure présent qui caractérise au moins une partie de la surface, on détermine ( 207 ), au moyen du modèle probabiliste de l'objet, des états de l'objet pouvant être prescrits par des probabilités et d'une probabilité de l'évènement de mesure présent, une évaluation de l'état de l'objet, au moins un type, une position et une orientation de l'objet détecté pouvant être déduite ( 208 ) de l'évaluation déterminée,

lorsque le programme de commande se déroule dans l'ordinateur de commande.

14. Système de détection de position pour la détermination de la position et de l'orientation d'un objet ( 131, 132, 133 ) en trois dimensions, notamment d'un véhicule ( 103 ) de traction dans une installation de grue pour conteneur, comprenant

    - un dispositif ( 121 ) de détection, pour la détection d'au moins une partie de la surface de l'objet pour la détermination d'un certain nombre de points **caractérisés par** leurs coordonnées sur la partie de la surface comme valeurs ( 205 ) d'échantillonnage,
    - une unité de prétraitement pour la représentation des valeurs d'échantillonnage en un évènement de mesure caractérisant au moins une partie de la surface,
    - une unité de mémoire pour mémoriser un modèle probabiliste d'objet qui reproduit des probabilités conditionnées d'évènements de mesure pouvant être prescrits, en supposant des états de l'objet pouvant être prescrits, un état de l'objet étant **caractérisé par** au moins le type, la position et l'orientation de l'objet ( 206 ),
    - une unité d'exploitation pour la détermination d'une évaluation d'un état de l'objet à partir d'un évènement de mesure présent qui caractérise au moins une partie de la surface au moyen du modèle probabiliste d'objet, de probabilités d'états de l'objet pouvant être prescrits et d'une probabilité de l'évènement de mesure présent ( 207 ), au moins le type, la position et l'orientation de l'objet détecté pouvant être déduit de l'évaluation déterminée de l'objet ( 208 ).

FIG 1

## FIG 2

```
              ┌─────────────┐
              │    START    │
              └──────┬──────┘
                     │
                     ▼
        ┌──────────────────────────────┐
        │      Objektmodelle laden      │──────── 201
        └──────────────┬───────────────┘
                       │
                       ▼
              ╱─────────────────╲
             ╱     Einfahrt       ╲    n
             ╲      LKW?          ╱────────┐
              ╲─────────────────╱          │
                     │ j         ── 202    │
                     ▼                     │
    ┌────────────────────────────────────────────┐
    │  Wahrscheinlichkeiten Objektzustände         │──── 203
    │          initialisieren                      │
    └──────────────────┬─────────────────────────┘
                       │
          ┌────────────▼───────────────┐
     ┌───▶│        LKW abtasten        │──── 204
     │    └────────────┬───────────────┘
     │                 ▼
     │    ┌────────────────────────────┐
     │    │   Abtastwerte vorverarbeiten│──── 205
     │    └────────────┬───────────────┘
     │                 ▼
     │    ┌────────────────────────────────────┐
     │    │ Wahrscheinlichkeiten Objektzustände │──── 206
     │    │         aktualisieren               │
     │    └────────────┬───────────────────────┘
     │                 ▼
     │    ┌────────────────────────────┐
     │    │     Meßergebnis ermitteln   │──── 207
     │    └────────────┬───────────────┘
     │                 ▼
     │    ┌────────────────────────────────────┐
     │    │  Typ, Position, Orientierung ableiten│──── 208
     │    └────────────┬───────────────────────┘
     │                 ▼
     │        ╱─────────────────╲
     │   n   ╱       Ende         ╲
     └──────╲    Be-/Entladen?    ╱
             ╲─────────────────╱ ── 209
                     │ j
                     ▼
              ┌─────────────┐
              │    ENDE     │
              └─────────────┘
```

## FIG 3

## FIG 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1337454 A1